**Europäisches Patentamt**

**European Patent Office**

**Office européen des brevets**

(11) Veröffentlichungsnummer : **0 148 469**
**B1**

(12) ·EUROPÄISCHE PATENTSCHRIFT

(45) Veröffentlichungstag der Patentschrift :
11.10.89

(21) Anmeldenummer : 84115763.9

(22) Anmeldetag : 19.12.84

(51) Int. Cl.⁴ : **B 01 D 53/34**

(54) Verfahren und Vorrichtung zum Abscheiden von Schadstoffen aus einem Rauchgas.

(30) Priorität : 23.12.83 DE 3346865

(43) Veröffentlichungstag der Anmeldung :
17.07.85 Patentblatt 85/29

(45) Bekanntmachung des Hinweises auf die Patenterteilung : 11.10.89 Patentblatt 89/41

(84) Benannte Vertragsstaaten :
AT BE CH DE FR GB IT LI LU NL SE

(56) Entgegenhaltungen :
DE–A– 2 249 874
DE–A– 2 263 319
DE–A– 2 325 733
DE–B– 2 161 475

(73) Patentinhaber : **Air Fröhlich AG für Energierückgewinnung**
· **Romanshorner Strasse 100**
**CH-9320 Arbon (CH)**

(72) Erfinder : **Frei, Willi**
**Höchster Strasse 11 b**
**CH-9016 St. Gallen (CH)**

(74) Vertreter : **Füchsle, Klaus, Dipl.-Ing. et al**
**Hoffmann . Eitle & Partner Patentanwälte Arabellastrasse 4**
**D-8000 München 81 (DE)**

## Beschreibung

Die Erfindung bezieht sich auf ein Verfahren zum Abscheiden von Schadstoffen aus einem Rauchgas gemäß den Merkmalen des Oberbegriffs des Anspruchs 1 und 7 sowie auf eine Vorrichtung zur Durchführung des Verfahrens entsprechend den Merkmalen des Oberbegriffs des Anspruchs 8.

Derartige Verfahren und Vorrichtungen sind in verschiedenen Ausführungsformen seit langem bekannt. Dabei wird in der Regel zur Reinigung schwefeldioxidhaltiger Abgase als Absorptionsflüssigkeit eine Calciumkarbonatsuspension, Kalkmilch, eine Calciumoxidsuspension oder ein Gemisch hiervon eingesetzt. Da jedoch das beim Auswaschen mit einer derartigen Absorptionsflüssigkeit aus dem Rauchgas ausgefällte Calciumsulfit bzw. Calciumsulfat eine niedrige Löslichkeit besitzt, kommt es in relativ kurzer Zeit in den Absorptionseinrichtungen zu einer Ablagerung dieser Ausfällungen in Form eines Steinansatzes. Dieser hat einen zunehmenden Druckverlust in den Absorptionseinrichtungen und eine Abnahme des Wirkungsgrades dieser Einrichtungen zur Folge.

Es wurde versucht, diesen Steinansatz entweder auf mechanischem oder chemischem Weg wieder aus den Einrichtungen zu entfernen. Die Erfindung bezieht sich nun auf die Weiterbildung einer chemischen Verfahrensweise.

Bei einem Verfahren und einer Vorrichtung der vorausgesetzten Art (DE-B 2 161 475) strömt der Rauchgasstrom durch einen Kühlturm und nachfolgend durch zwei Absorptionstürme. In der ersten Absorptionseinheit ist der pH-Wert kleiner als 4 zur Entfernung des Steinansatzes gehalten, während in der zur ersten in Reihe geschalteten zweiten Einheit zur Erzielung einer möglichst großen Gasreinigungswirkung ein pH-Wert größer als 7 eingestellt ist. Durch zyklisches Umschalten des Rauchgasstromes und der Steuerung der pH-Werte in den beiden Absorptionstürmen, also einen gegenläufigen Betrieb der in Reihe geschalteten Einrichtungen, wird eine Reinigung der Anlage bei konstantem Entschwefelungsgrad ohne Betriebsunterbrechung erreicht. Bei diesem bekannten Verfahren wirkt sich aber als nachteilig aus, daß drei Türme mit hohen Investitionskosten vorgesehen werden müssen und daß die Überwindung des rauchgasseitigen Druckverlustes der Anlage mit großem Energieaufwand verbunden ist. Der Betrieb des Kühlturmes, in welchem gleichzeitig die festen Bestandteile aus dem Rauchgas durch verdüstes Wasser entfernt werden, verursacht zudem einen hohen Frischwasserverbrauch und verhindert eine Nutzung der Restenergie im Rauchgas. Auch zum Betreiben der Absorptionstürme muß zur Herstellung der Kalkaufschlämmung Frischwasser verwendet werden. Zudem muß im Falle eines schon in einem der beiden Absorptionstürme auftretenden Defekts die gesamte Reinigungsanlage stillgesetzt werden.

Aufgabe der Erfindung ist es, ein Verfahren und Vorrichtungen zur Abscheidung von Schadstoffen aus einem Rauchgas zu schaffen, bei denen bei einfacher, wirtschaftlicher Verfahrensführung und damit einfachem, wirtschaftlichem und komptaktem Aufbau der Vorrichtung ein großer Reinigungseffekt erzielt wird. Zudem soll eine hohe Betriebssicherheit erreicht werden.

Diese Aufgabe wird erfindungsgemäß durch ein Verfahren und eine Vorrichtung mit den Merkmalen des Anspruchs 1 bzw. des Anspruches 8 gelöst.

Ein erster grundlegender Unterschied zwischen der bekannten Betriebsweise und dem erfindungsgemäßen Verfahren besteht darin, daß bei der bekannten Lösung die Absorptionseinrichtungen in Reihe geschaltet sind und ein zyklisches Umkehren der Betriebsweise erfolgt. Das erfindungsgemäße Konzept ist hingegen durch ein Parallelschalten der unterschiedlichen Behandlungszonen und einen Parallelbetrieb dieser beiden Behandlungszonen gekennzeichnet. Das erfindungsgemäße Konzept beruht danach auf einem andersartigen Prinzip.

Ein weiterer gravierender Unterschied zwischen dem Stand der Technik und der Erfindung ist darin zu sehen, daß erfindungsgemäß in einer einzigen Anordnung gleichzeitig sowohl das Kühlen als auch das Waschen des Rauchgases vorgenommen werden. Konkret wird also ein Absorptions-Wärmetauscher eingesetzt. Hierdurch ergibt sich eine besonders kompakte Vorrichtung.

Zwar sind Absorptions-Wärmetauscher, die bei dem Verfahren nach Anspruch 1 zugrundegelegt werden, an sich bekannt (DE-B 2 263 319). Bei diesen bekannten Absorptions-Wärmetauschern ist aber das Problem des chemischen Abreinigens von Steinsalz beim Waschen schwefeldioxidhaltiger Verbrennungsgase mit einschlägigen Absorptionsflüssigkeiten weder angesprochen noch gelöst.

Des weiteren wird bei dem erfindungsgemäßen Verfahren das Rauchgas in dem Absorptions-Wärmetauscher unter Taupunkt gekühlt. Das dabei aus dem Rauchgas ausgeschiedene Kondensat erhöht den Reinigungseffekt des erfindungsgemäßen Verfahrens, da das Kondensat die Menge an Absorptionsflüssigkeit insgesamt erhöht. Dabei werden Absorptionsflüssigkeit und Rauchgas über einen relativ langen Strömungsweg und damit innerhalb einer hohen Verweilzeit und zudem über große Austauschflächen miteinander in Berührung gebracht.

Ein weiterer wesentlicher Vorteil des erfindungsgemäßen Konzepts ist darin zu sehen, daß aufgrund des Parallelstrom-Prinzips bei Ausfall einer von mehreren Behandlungszonen die übrigen Behandlungszonen weiter betrieben werden können, während bei der bekannten Konstruktion ein derartiger Schadensfall zu einem Abschalten der gesamten Anlage zwingt.

Bei dem erfindungsgemäßen Verfahren bietet es sich an, durch die erste Behandlungszone (Gasreinigung) einen größeren Teilstrom des Rauchgases hindurchzuleiten als durch die zweite Behandlungszone, in der die Anlagenreinigung stattfindet. Danach wird also überwiegend das Gas der gewünschten Reinigung unterzogen und nur ein Teil des möglichen Gasreinigungsbetriebes aufgegeben und hierfür die Reinigung eines kleineren Teils der Anlage vorgenommen. Im Verlauf des Betriebs wird dann zyklisch ein Teil der ersten Behandlungszone durch Betreiben mit der zweiten Absorptionsflüssigkeit im Sinne einer Anlagenreinigung betrieben, während die Behandlungszone, in der die Anlagenreinigung vorgenommen worden ist, wieder im Sinne einer Gasreinigung eingesetzt wird.

Beim Reinigen von schwefeldioxidhaltigen Rauchgasen ist es zweckmäßig, daß die erste Absorptionsflüssigkeit Kalkmilch, Calciumoxidsuspension, Calciumcarbonatsuspension oder eine Mischung hiervon ist, während die zweite Absorptionsflüssigkeit Wasser und darin gelöste schwefelige Säure aus dem Rauchgas ist, d. h. unbehandeltes Kondensat.

Die Reinigung der Anlage erfolgt also mit unbehandeltem Kondensat, das sich durch mehrmaliges Hindurchleiten durch die zweite Behandlungszone sauer einstellt und damit den Steinansatz aus Calciumsulfit bzw. Calciumsulfat löst, der während der Gasreinigungsphase gebildet wird.

Es ist ferner von Vorteil, daß eine Vorkühlung des Rauchgases bis auf 40 °C bis 60 °C mit Hilfe einer Wärmerückgewinnung vorgenommen wird. Hier wird ein wesentlicher Teil der Wärme aus dem Rauchgas zurückgewonnen. Damit läßt sich eine nach dem erfindungsgemäßen Verfahren betriebene Anlage mit einem guten energetischen Wirkungsgrad fahren.

Durch diese Maßnahme werden noch weitere zwei Vorteile erreicht. Zum einen kann die rückgewonnene Wärme nutzbringend für weitere Prozesse eingesetzt werden. Zum anderen erreicht das Rauchgas mit der richtigen Konditionierung die Reinigungsanordnung, da es dann schon im wesentlichen auf Taupunkttemperatur abgekühlt ist mit der Folge, daß im Wärmetauscher sofort die Kondensatbildung einsetzt und die angestrebte Menge an Kondensat tatsächlich im Absorptions-Wärmetauscher ausgeschieden wird. Neben der Eintrittstemperatur des Rauchgases in die Anordnung, die, wie geschildert worden ist, günstig erreicht wird durch das Vorschalten einer Wärmerückgewinnungsanlage, sind natürlich wesentlich die zeitlichen Mengen an Außenluft und Rauchgas, die den Wärmetauscher durchströmen. Hinzu kommt die richtige Bemessung der Wärmetausch-Flächen. Die angesprochenen richtigen zeitlichen Mengen der Umgebungsluft und des Rauchgases sind selbstverständlich auch wesentlich für die nach der Reinigung sich anschließende Mischung beider Strömungen zur Vermeidung von Schwaden- und Nebelbildung.

Diese weitere zweckmäßige Verfahrensvariante besteht darin, daß das gereinigte Rauchgas mit der für die Kühlung des Rauchgases eingesetzten Außenluft vor Eintritt in die Atmosphäre vermischt wird. Durch diese Maßnahme wird zum einen der Taupunkt des Gasgemisches erhöht, wodurch einer Nebel- bzw. Schwadenbildung entgegengewirkt wird. Zum anderen können aufgrund des zugleich erreichten Verdünnungseffekts die gegebenenfalls im Rauchgas verbliebenen geringen Mengen an Schadstoffen in zulässiger Weise in die Atmosphäre entlassen werden.

Eine weitere zweckmäßige Ausbildung des erfindungsgemäßen Verfahrens besteht darin, daß das Rauchgas aus der zweiten Behandlungzone (Anlagenreinigung) in den Waschzyklus zurückgeführt wird. Durch diese Verfahrensvariante wird eine besonders weitgehende Reinigung des Rauchgases erreicht, indem das in der Behandlungszone, die der Anlagenreinigung dient, nicht so gut von Schadstoffen befreite Rauchgas einem weiteren Reinigungszyklus unterworfen wird.

Schließlich besteht eine Weiterbildung des erfindungsgemäßen Verfahrens darin, daß 5/6 des zu reinigenden Rauchgasstromes mit der ersten Absorptionsflüssigkeit und 1/6 mit der zweiten Absorptionsflüssigkeit durchsetzt werden und daß der Umschaltzyklus ein bis vier Stunden dauert. Hierdurch ergibt sich ein besonders guter Wirkungsgrad des erfindungsgemäßen Verfahrens.

Je nach Art des verwendeten Brennstoffs, aus dem das zu behandelnde Rauchgas herrührt, kann sich ein pH-Wert bis 1,0 einstellen, während nach dem Austritt aus den Behandlungszonen, die der Gasreinigung dienen, die Absorptionsflüssigkeit einen pH-Wert von mindestens 5 aufweisen soll. Durch diese Werte wird einerseits eine besonders gute Reinigung der Anlage durch das relativ saure Kondensat, das die sogenannte zweite Absorptionsflüssigkeit darstellt, sowie eine gute Schwefeldioxidabsorption in den der Gasreinigung dienenden Behandlungszonen durch einen hohen pH-Wert erzielt.

Die erfindungsgemäße Vorrichtung ist grundsätzlich dadurch charakterisiert, daß eine Absorptions-Wärmetauscheranordnung zum gleichzeitigen Kühlen des Rauchgases unter Taupunkt als auch zum Waschen des Rauchgases vorgesehen ist und in dieser Absorptions-Wärmetauscheranordnung die mindestens zwei Betriebszonen parallel zueinander geschaltet sind. Das Rauchgas wird, wie bereits geschildert, in zwei parallel geführte Teilströme aufgeteilt, von denen der eine Teilstrom durch die erste Behandlungszone und der andere durch die zweite Behandlungszone geleitet wird.

Die erfindungsgemäße Einrichtung zeichnet sich durch eine kompakte Bauweise aus, nachdem die Funktionen des Kühlens und Waschens des Rauchgases in ein Gerät integriert sind, nämlich in einen Absorptions-Wärmetauscher. Bezüglich des Wärmetauscherteils sind die beiden unterschiedlichen Betriebszonen, nämlich die eine für die Gasreinigung und die andere für die Anlagenreinigung, identisch ausgebildet, so daß auch ein einfacher Aufbau der Konstruktion gewährleistet ist.

Es ist zweckmäßig, daß der Wärmetauscher aus einer Mehrzahl von parallel angeordneten Rohren besteht, wobei das Rauchgas in den Rohren und die Kühlluft in den Raum zwischen den Rohren geführt sind sowie daß Rohre des Wärmetauschers vertikal verlaufen und das Rauchgas die Rohre von oben nach unten durchströmt, während die Kühlluft im Gegenstrom von unten nach oben geführt wird.

Hierdurch werden zwei Vorteile erreicht. Zum einen ergibt sich für den Absorptions-Wärmetauscher eine schornsteinähnliche Form. Dies begünstigt das Vorsehen eines langen Rauchgaskamins, in dem eine gute Mischung des in die Atmosphäre zu entlassenden Rauchgases und der als Kühlluft eingesetzten Außenluft stattfindet, mit dem schon erörterten Zweck. Das Gegenstromprinzip bezüglich der Führung des Rauchgases und der Kühlluft führt des weiteren zu einem guten Herabkühlen des Rauchgases unter Taupunkt und zu einer optimalen Ausnutzung der Tauscherflächen.

Eine zweckmäßige Ausgestaltung der erfindungsgemäßen Vorrichtung besteht darin, daß die Sprühdüsen für die Absorptionsflüssigkeit oberhalb des Eintritts für das Rauchgas in den Wärmetauscher angeordnet sind, so daß ein Gleichstrom-Waschen stattfindet. Aufgrund dieser Maßnahme strömen das Kondensat aus dem Rauchgas, das bei dessen Abkühlung unter Taupunkt entsteht, und die zusätzliche Absorptionsflüssigkeit in einer Richtung mit der Folge eines besonders guten Wascheffekts, der zusätzlich auch durch die Nutzung möglichst großer Tauscherflächen und des Einhaltens einer besonders langen Wirkzeit erhöht wird.

Ein besonders einfacher Aufbau der erfindungsgemäßen Vorrichtung ergibt sich dadurch, daß die Rohre des Wärmetauschers in einem Kreisring angeordnet und die Rohre innerhalb von mehreren Sektoren jeweils zu einer Betriebszone zusammengefaßt sind. Dadurch weisen nämlich die Betriebszonen des Wärmetauscher einen identischen Aufbau auf. Die einzelnen Betriebszonen entstehen nur dadurch, daß entweder mit der ersten oder zweiten Absorptionsflüssigkeit in den einzelnen Zonen gearbeitet wird.

Für die Versorgung der Betriebszonen jeweils mit der ersten oder zweiten Absorptionsflüssigkeit bestehen grundsäzlich zwei Möglichkeiten.

Die erste Variante ist dadurch charakterisiert, daß jeder Betriebszone ein eigenes Versorgungssystem für die Absorptionsflüssigkeit zugeordnet ist, das von der ersten auf die zweite Absorptionsflüssigkeit und umgekehrt umschaltbar ist.

Die zweite prinzipielle Möglichkeit ist darin zu sehen, daß sämtliche Behandlungszonen eine Sprühdüsenanordnung für die erste Absorptionsflüssigkeit aufweisen und eine weitere Sprühdüsenanordnung für die zweite Absorptionsflüssigkeit vorgesehen ist, die wahlweise über den Eintritt der jeweiligen Behandlungszone, die mit der zweiten Absorptionsflüssigkeit betrieben wird, einstellbar ist.

Die Erfindung wird nachstehend anhand der in den beigefügten Zeichnungen dargestellten Ausführungsbeispielen näher erläutert.

Es zeigt:

Fig. 1 in schematischer Darstellung einen vertikalen Schnitt durch eine erste Ausführungsform der erfindungsgemäßen Vorrichtung,

Fig. 2 einen Querschnitt durch diese Ausführungsform nach der Schnittlinie II-II der Fig. 1,

Fig. 3 in schematischer Darstellungsweise einen Längsschnitt durch eine zweite Ausführungsform der erfindungsgemäßen Vorrichtung und

Fig. 4 eine Draufsicht auf die Vorrichtung nach Fig. 3.

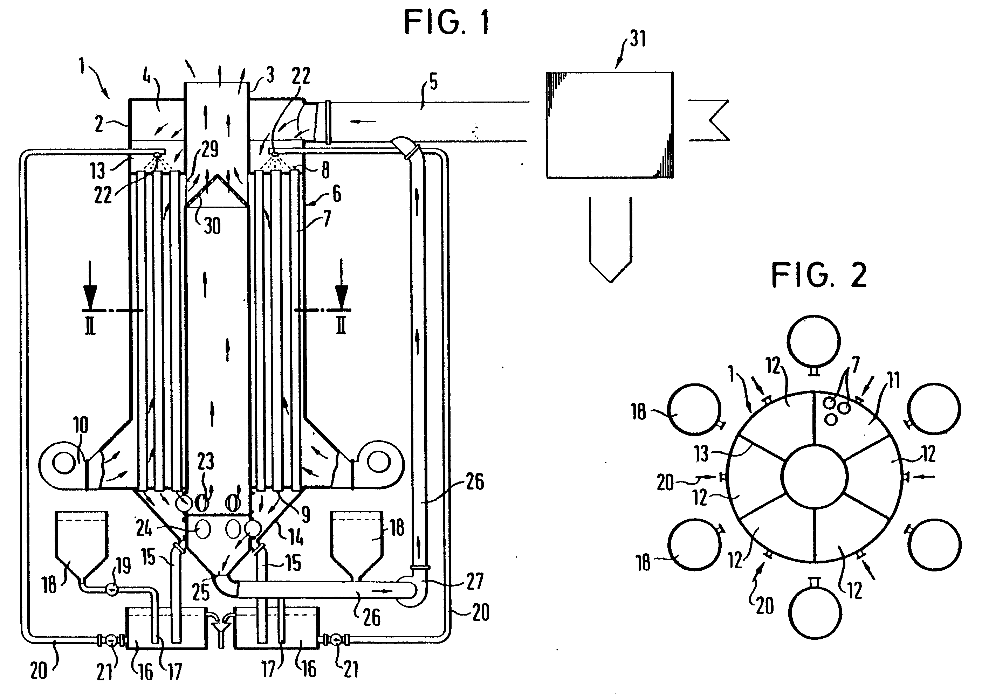

In den Fig. 1 und 2, die eine erste Ausführungsform darstellen, ist ein Absorptions-Wärmetauscher insgesamt mit 1 bezeichnet. Dieser ist im wesentlichen schornstein- bzw. turmförmig aufgebaut. Er weist ein im wesentlichen zylindrisches, vertikal stehendes Gehäuse 2 auf, in welchem zentrisch ein rohrförmiger Rauchgaskamin 3 im wesentlichen durch das ganze Gehäuse hindurchgehend angeordnet ist. Am oberen Ende des Gehäuses 1 ist ein ringförmiger Verteilungskanal 4 vorgesehen, in welchen eine Eintrittsleitung 5 für das zu reinigende Rauchgas einmündet. Die überwiegende Höhe des Gehäuses 2 wird von einem Wärmetauscher 6 eingenommen, welcher aus vertikal verlaufenden Rohren 7 für den Durchtritt des Rauchgases besteht. An den Stirnenden der Rohre 7 sind die Zwischenräume zwischen den Rohren 7 jeweils verschlossen, so daß ein oberer Eintritt 8 und ein unterer Austritt 9 für das Rauchgas gebildet wird. Der Eintritt 8 und der Austritt 9 des Wärmetauschers 6 ist vorzugsweise in sechs nebeneinander angeordnete, sektorenartige, sich um den Rauchgaskamin 3 gruppierende Zonen mit Hilfe von radialen Wänden 13 unterteilt. Fünf der Zonen, hier mit 12 bezeichnet, bilden in noch näher zu beschreibender Weise jeweils eine erste Betriebszone, während eine der Zonen, hier mit 11 gekennzeichnet, eine zweite Betriebszone darstellt. Allen Zonen 11 bzw. 12 gemeinsam ist an der Unterseite des Gehäuses 2 ein Kühlluft-Gebläse 10 zugeordnet, welches angesaugte Frischluft am unteren Ende des Wärmetauschers 6 zwischen die Rohre 7 einleiten, so daß die Kühlluft eine Flußrichtung von unten nach oben, also entgegengesetzt der Rauchgasströmung, besitzt. Am unteren Teil des Gehäuses 2, unterhalb des unteren Austritts 9 des Wärmetauschers 6, ist eine ebenfalls zonenmäßig unterteilte Sammelwanne 14 vorgesehen, die zur Aufnahme bzw. Weiterleitung des austretenden Rauchgases und des Kondensates dient. Der Boden der Sammelwanne 14 ist in jeder Zone über eine Kondensatleitung 15 mit je einem Behälter 16 verbunden. In den jeweiligen Behälter 16 mündet eine mit einem Kalkmilch-Behälter 18 verbundene Leitung 17 ein. In der Leitung 17 ist eine Dosiereinrichtung 19 vorgesehen. Aus einem jeden der Behälter 16 führt eine ein pH-Messgerät 21 aufweisende Leitung 20 in das Innere des Verteilungskanales 4, wo sie in Sprühdüsen 22 enden, die jeweils über dem Eintritt 8 der zugeordneten Zone 11 bzw. 12 angeordnet sind.

In der zylindrischen Innenwand der Sammelwanne 14 sind in jeder Zone 11 bzw. 12 zwei durch Klappen wechselweise verschließbare Öffnungen 23 bzw. 24 vorgesehen. Die obere Öffnung 23 steht jeweils mit dem Rauchgaskamin 3 in Verbindung. Die untere Öffnung 24 führt in eine vom Rauchgaskamin abgetrennte Kammer 25, welche über eine Bypassleitung 26, in der ein Zusatzgebläse 27 angeordnet ist, mit der Eintrittsleitung 5 verbunden ist.

Der Wärmetauscher 6 weist am oberen Ende an seiner dem Rauchgaskamin 3 zugewandten Wand Öffnungen 29 auf, die eine Verbindung zum Rauchgaskamin darstellen. Auf Höhe der Öffnungen 29 ist im Rauchgaskamin 3 ein perforiertes Durchtrittsdach 30 vorgesehen, welches der besseren Vermischung des Rauchgases mit der erwärmten Kühlluft dient.

Dem Absorptions-Wärmetauscher 1 ist eine nur schematisch dargestellte, in bekannter Weise arbeitende Wärmerückgewinnungsanlage 31 vorgeschaltet.

Die Vorrichtung nach den Fig. 1 und 2 arbeitet folgendermaßen :

Das in der Wärmerückgewinnungsanlage 31 bis auf vorzugsweise 40 °C bis 60 °C vorgekühlte Rauchgas tritt über die Eintrittsleitung 5 in die ringförmige Verteilungskammer 4 ein, in der es in Teilströmen gleichmäßig auf die sechs Zonen 11 bzw. 12 verteilt wird. Am Eintritt 8 jeder Zone 11 bzw. 12 wird eine Absorptionsflüssigkeit über die Sprühdüsen 22 auf die Tauschflächen des Absorptions-Wärmetauschers aufgesprüht. Dabei wird in die fünf Zonen 12 als sogenannte erste Absorptionsflüssigkeit ein mittels Calciumhydroxid oder einer ähnlichen Kalksuspension neutra-. lisiertes Kondensat eingebracht, während in der sechsten Zone 11 als sogenannte zweite Absorptionsflüssigkeit unbehandeltes Kondensat eingedüst wird. Es hat sich gezeigt, daß dieses unbehandelte Kondensat, das schwefelige Säure aufgrund aus dem Rauchgas ausgewaschenen Schwefeldioxids enthält, eine ausgezeichnete Reinigungswirkung auf Ablagerungen aufweist, welche überlicherweise in Rauchgasreinigungsanlagen auftreten. Allerdings ist in dieser Zone z. B. der Entschwefelungswirkungsgrad relativ niedrig, so daß das nur teilweise entschwefelte Rauchgas am Zonenaustritt 9 des Absorptions-Wärmetauschers 6 über die Öffnung 24, die Bypassleitung 26 und das Zusatzgebläse 27 wieder dem Gesamtrauchgasstrom in der Eintrittsleitung 5 zugeführt wird.

In den restlichen fünf Zonen 12, in welchen das neutralisierte Kondensat aufgesprüht wird, bewirkt der Kontakt zwischen dieser ersten Absorptionsflüssigkeit und dem Rauchgas einen hohen Entschwefelungsgrad. Gleichzeitig wird durch die Außenluftkühlung im Wärmetauscher 6 laufend Kondensat aus dem Rauchgas gewonnen, so daß für den Betrieb der Anlage kein Frischwasser benötigt wird. Das gereinigte Rauchgas strömt schließlich durch die Öffnungen 23 aus den einzelnen Zonen in den zentralen Rauchgaskamin 3 und danach durch das perforierte Durchtrittsdach 30 im Rauchgaskamin, worauf es sich mit der auf den Öffnungen 29 strömenden erwärmten Kühlluft mischt und so verdünnt in die Atmosphäre entweicht.

Das sich im Absorptions-Wärmetauscher 1 bildende Kondensat fließt zonenweise über die Sammelwanne 14 und die Kondensatleitungen 15 in die Behälter 16. In den fünf Zonen 12 findet eine Neutralisation des Kondensates mit Calciumhydroxid oder einer ähnlichen Kalksuspension statt, welche aus dem Kalkmilch-Behälter 18 und der Leitung 17 in den Behälter 16 durch die Dosiereinrichtung 19 eingebracht wird. Aus dem Behälter 16 wird das neutralisierte Kondensat über das pH-Meßgerät 21 und die Kondensatleitung 20 den Sprühdüsen 22 zugeleitet. Die Steuerung der Kalksuspensionsmenge erfolgt über das pH-Meßgerät 21. Für eine zufriedenstellende Schwefeloxidabscheidung soll das Kondensat am Austritt 9 des Absorptions-Wärmetauschers mindestens einen Wert von pH 5 aufweisen. In der sechsten Zone 11 wird das Kondensat nicht behandelt, also nicht neutralisiert, sondern in unbehandeltem Zustand über das pH-Meßgerät 21 und die Leitung 20 der Düse 22 zugeführt. Das unbehandelte Kondensat weist einen sehr niedrigen pH-Wert je nach Brennstoff bis 1,0 auf, wodurch der auf den Wänden der Rohre dieser Zone befindliche Steinansatz gelöst und mit der Absorptionsflüssigkeit entfernt wird.

Der Reinigungseffekt für das ganze System wird dadurch erreicht, daß in zeitlichen Abständen von vorzugsweise ein bis vier Stunden der Betrieb mit reinem, unneutralisiertem Kondensat von einer Zone zur anderen umgeschaltet wird. Da jede Zone mit einem eigenen Behälter und Leitungsnetz ausgerüstet ist, werden sämtliche Teile der Rauchgasreinigungsanlage, welche mit der Absorptionsflüssigkeit in Berührung kommen, saubergehalten.

Die Betriebssicherheit des Systems wird durch den Umstand erhöht, daß für die Reinigung der Rauchgase nur fünf der insgesamt sechs installierten Zonen benötigt werden. Da alle sechs Zonen 11, 12 mit unabhängigen Kondensataufbereitungsanlagen ausgerüstet sind, kann bei einem Defekt in einer Zone 11, 12 diese sofort außer Betrieb genommen werden. Es hat sich gezeigt, daß auch bei einer Verzögerung des Umschaltbetriebes von mehreren Stunden bei Wiederaufnahme des erfindungsgemäßen Normalbetriebes durch die intensive Reinigungswirkung des Kondensates keine bleibenden Verkrustungen auftreten.

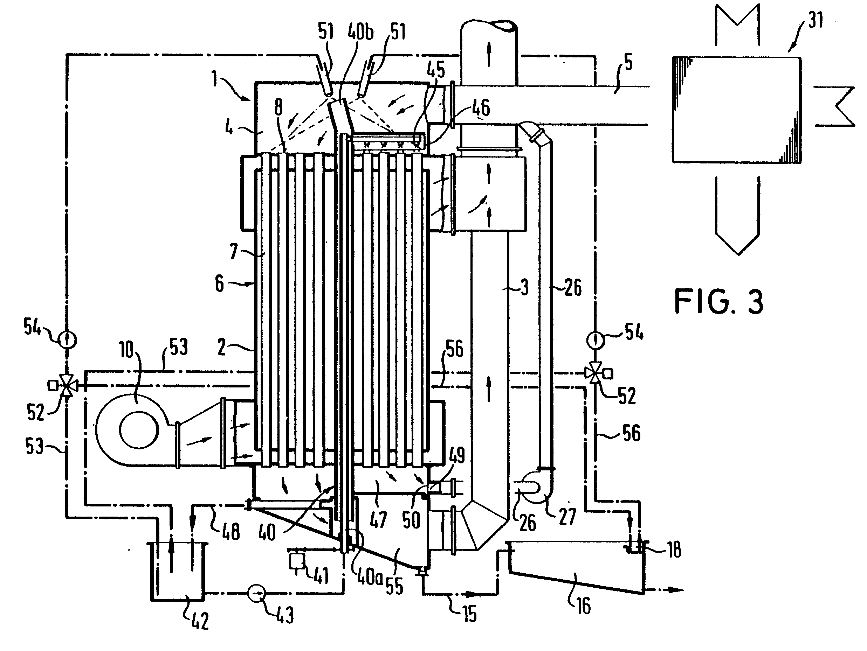

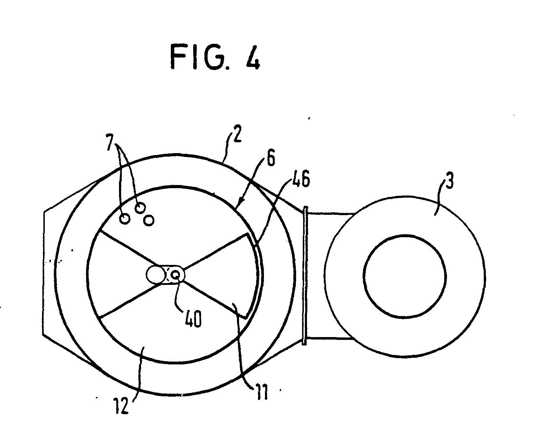

Eine zweite grundsätzliche Ausführungsform der Vorrichtung ergibt sich aus den Fig. 3 und 4. Dabei sind mit dem Ausführungsbeispiel nach den Fig. 1 und 2 vergleichbare Teile mit denselben Bezugszahlen bezeichnet.

Bei dieser Konstruktion ist der Rauchgaskamin 3 außerhalb des Gehäuses 2, in dem der Wärmetauscher 6 angeordnet ist, geführt, und zwar parallel zur Achse des Gehäuses 2 bzw. der Rohre 7 des Wärmetauschers 6. Durch diese Maßnahme ergibt sich gegenüber der zuvor erläuterten Konstruktion eine Reduktion sowohl des Durchmessers des Rauchgaskamins 3 als auch der Außendimensionen des Wärmetauschers, was insgesamt zu einer noch kompakteren und kostengünstigeren Bauweise führt.

Zentral im Wärmetauscher 6 verläuft ein Doppelmantelrohr 40, das von einem extern angeordneten Motorantrieb 41 in eine zyklisch-schaltende oder auch in eine kontinuierliche Drehbewegung versetzbar ist. In dem Innenrohr 40a des Doppelmantelrohrs 40 wird mittels einer Pumpe 43 aus einem Behälter 42 unbehandeltes Kondensat, d. h. also saure Absorptionsflüssigkeit, nach oben zu einer mit dem Doppelmantelrohr 40 starr befestigten und sich damit mit diesem mitdrehenden Sprühdüsenanordnung 45 gefördert. Mit dieser Sprühdüsenanordnung 45 wird sukzessive in eine Betriebszone des Wärmetauschers 6 das saure Kondensat, d. h. die zweite Absorptionsflüssigkeit, mit der die Reinigung der Anlage bewirkt wird, eingesprüht.

Für das Einbringen der ersten Absorptionsflüssigkeit für die Reinigung des Gases ist eine zentrale Sprühdüsenanordnung 51 vorgesehen, die sich oberhalb der Sprühdüsenanordnung 45 befindet. Um ein Vermischen mit dem von der zentralen Sprühdüsenanordnung 51 abgegebenen ersten Absorptionsflüssigkeit mit der von der Sprühdüsenanordnung 45 abgegebenen zweiten Absorptionsflüssigkeit und damit ein Eindringen der ersten Absorptionsflüssigkeit in die Behandlungszone des Wärmetauschers 6, in der gerade die Reinigung der Anlage stattfindet, zu vermeiden, besitzt die Sprühdüsenanordnung 45 eine sektorenförmige Abdeckung 46, welche nicht ganz bis zu der oberen Eintrittsfläche 8 des Wärmetauschers 6 reicht. Diese erlaubt aber andererseits den ungehinderten Eintritt von 1/6 des zu behandelnden Rauchgases in die Betriebszone 11, in der die Reinigung der Anlage stattfindet. Diese Betriebszone umfaßt, wie bei dem vorstehend behandelten Ausführungsbeispiel 1/6 der Wärmetauscherrohre 7. Dementsprechend fließt das von der Sprühdüsenanordnung 45 abgegebene unbehandelte Kondensat, d. h. die zweite Absorptionsflüssigkeit, durch dieses 1/6 der Wärmetauscherrohre 7 nach unten und wird dort von einer starr mit dem Doppelmantelrohr 40 verbundenen, ebenfalls sektorenförmigen Sammelwanne 47 aufgefangen, die unmittelbar unterhalb des unteren Austritts 9 des Wärmetauschers und fluchtend zu der Sprühdüsenanordnung 45 angeordnet ist. Das in der sektorförmigen Sammelwanne 47 aufgefangene unbehandelte Kondensat fließt von dort durch eine im Doppelmantelrohr befindliche Öffnung nach unten und im Ringspalt über einen Syphon zurück in den Behälter 42 für das unbehandelte Kondensat, d. h. die zweite Absorptionsflüssigkeit. Zusätzlich zum eingedüsten Kondensat fließt in dieser Behandlungszone, die der Anlagenreinigung dient, jenes Kondensat in die Sammelwanne 47 ab, welches durch die Kondensation des über das extern angeordnete Bypass-Gebläse 27 im Gleichstrom mit dem Kondensat geförderten Rauchgases gebildet wird. Die Sammelwanne 47 besitzt an ihrem äußeren Umfang mit Abstand vom Wannenboden eine Öffnung 49, durch welche das vom Kondensat getrennte, aber nur unvollständig gereinigte Rauchgas in eine an der unteren Sammelwanne des Wärmetauschers angebrachte ringförmige Rauchleitung strömt, von welcher aus — unabhängig von der jeweiligen Stellung eines Segment-Drehschiebers 50 — das Rauchgas mittels des Bypass-Gebläses 27 wieder zurück in die Eintrittsleitung 5 gefördert wird.

Das äußere Rohr 40b des zentralen Doppelmantelrohrs 40 besitzt an seinem oberen Ende eine abgekröpfte Verlängerung, welche exzentrisch endet und die während jeweils zwei Positionen des Drehschiebers 50 sich genau gegenüber der doppelt ausgeführten zentralen Sprühdüsenanordnung 51 für die erste Absorptionsflüssigkeit, d. h. für die Gasreinigung, befindet. Diese doppelte Ausführung der Düsenanordnung 51 hat zum Zweck, daß abwechselnd das eine oder andere System mit saurem, unbehandeltem Kondensat, d. h. mit der zweiten Absorptionsflüssigkeit, betrieben und dadurch von Ablagerungen befreit werden kann. Zu diesem Zweck ist nicht nur die Düsenanordnung 51 doppelt ausgebildet, sondern es sind vorzugsweise auch die Hauptwaschpumpe 54 und ein Dreiwegeventil 52 doppelt vorhanden. Ferner ist je eine Ansaugleitung 53 zum Behälter 42 für das unbehandelte Kondensat sowie je eine Leitung 54 zum Behälter 16 für die erste Absorptionsflüssigkeit, d. h. für das neutralisierte Kondensat, vorgesehen. Mit dieser Einrichtung kann somit das gesamte Leitungssystem mit allen Armaturen nach je einem halben Umfangsdurchlauf des Doppelrohrs 40 periodisch mit dem sauren Kondensat, d. h. mit der zweiten Absorptionsflüssigkeit, betrieben werden. Die während dieser der Anlagenreinigung dienenden Phase geförderte Menge an saurem Kondensat fließt durch das abgekröpfte Außenrohr 40b über den Doppelmantel des Rohrs 40 nach unten ab und tritt über den Syphon wieder zurück in den Behälter 42 für das saure Kondensat, wodurch der Kreislauf geschlossen ist. Vorzugsweise wird die Hauptpumpe 54 während dieser Betriebsphase durch geeignete Maßnahmen in ihrer Drehzahl reduziert, was z. B. durch einen polumschaltbaren Antrieb erfolgen kann. Es resultiert daraus eine wesentlich verringerte Fördermenge und stark reduzierter Energiebedarf für den Pumpenbetrieb, wodurch die Wirtschaftlichkeit der Anlage verbessert wird.

Die restlichen fünf Betriebszonen 12 des Absorptions-Wärmetauschers 1 arbeiten in bekannter Weise, wobei allerdings im Unterschied zu der vorstehend beschriebenen Anlage nach Fig. 1 und 2 die Sammelwanne 55 unterhalb des Austritts 9 des Wärmetauschers 6 nicht mehr in sechs Zonen unterteilt ist, sondern die erste Absorptionsflüssigkeit aus sämtlichen Zonen aufnimmt. Aus dieser Sammelwanne 55 wird die erste Absorptionsflüssigkeit über die Leitung 15 in den Behälter 16 gefördert, wo es in schon beschriebener Weise auf einen vorgegebenen pH-Wert neutralisiert wird.

**Patentansprüche**

1. Verfahren zum Abscheiden von Schadstoffen aus Schwefeldioxid enthaltenden Rauchgasen, bei dem

a) das Rauchgas gekühlt wird,

b) zur Gasreinigung in einer ersten Behandlungszone in das Rauchgas eine erste Absorptionsflüssigkeit eingebracht wird, während

c) zur Anlagenreinigung in einer zweiten Behandlungszone in das Rauchgas eine zweite Absorptionsflüssigkeit eingebracht wird,

d) und die beiden Behandlungszonen zyklisch getauscht werden, dadurch gekennzeichnet,

e) daß in einer einzigen Anordnung gleichzeitig sowohl das Kühlen als auch das Waschen des Rauchgases vorgenommen werden, wobei das Rauchgas under den Taupunkt gekühlt wird und

f) dieser Kühlvorgang durch Außenluft im ·Gegenstrom erfolgt,

g) das Rauchgas bei seinem Durchtritt durch die Anordnung in mindestens zwei parallel geführte Teilströme aufgeteilt wird, von denen der erste durch die erste Behandlungszone und der zweite durch die zweite Behandlungszone geleitet wird,

h) das aus dem Rauchgas gebildete Kondensat und die Absorptionsflüssigkeit im Gleichstrom geführt werden, und

i) das aus dem Rauchgas gebildete Kondensat mit der darin gelösten schwefeligen Säure als zweite Absorptionsflüssigkeit zur Anlagenreinigung in die zweite Behandlungszone eingebracht wird.

2. Verfahren nach Anspruch 1, dadurch gekennzeichnet, daß die erste Absorptionsflüssigkeit Kalkmilch, Calciumoxidsuspension, Calciumcarbonatsuspension oder eine Mischung hiervon ist.

3. Verfahren nach Anspruch 1 oder 2, dadurch gekennzeichnet, daß eine Vorkühlung des Rauchgases bis auf 40 °C bis 60 °C mit Hilfe einer Wärmerückgewinnung vorgenommen wird.

4. Verfahren nach den Ansprüchen 1 bis 3, dadurch gekennzeichnet, daß das gereinigte Rauchgas mit der für die Kühlung des Rauchgases eingesetzten Außenluft vor Eintritt in die Atmosphäre vermischt wird.

5. Verfahren nach Anspruch 1, dadurch gekennzeichnet, daß das Rauchgas aus der zweiten Behandlungszone (Anlagenreinigung) in den Waschzyklus zurückgeführt wird.

6. Verfahren nach den Ansprüchen 1 bis 5, dadurch gekennzeichnet, daß 5/6 des zu reinigenden Rauchgasstromes mit der ersten Absorptionsflüssigkeit und 1/6 mit der zweiten Absorptionsflüssigkeit durchsetzt wird und daß der Umschaltzyklus ein bis vier Stunden dauert.

7. Verfahren nach den Ansprüchen 1 bis 6, dadurch gekennzeichnet, daß das zyklische Vertauschen der zweiten Behandlungszone (11) auf die anderen Zonen (12) in einem zeitlichen Abstand von 4 bis 6 Stunden erfolgt.

8. Vorrichtung zur Durchführung des Verfahrens nach Anspruch 1, mit

a) einer Kühleinrichtung für das Rauchgas,

b) einer Absorptionseinrichtung, die mindestens zwei Behandlungs zonen umfaßt, und

c) einer Anordnung zum zyklischen Tauschen der beiden Behandlungszonen, dadurch gekennzeichnet, daß

d) eine Absorptions-Wärmetauscheranordnung (1) vorgesehen ist,

e) in dieser Absorptions-Wärmetauscheranordnung mindestens zwei Behandlungszonen (11, 12) parallel zueinander geschaltet sind, und

f) unterhalb der Absorptions-Wärmetauscheranordnung eine zonenmäßig unterteilte Kondensat-Sammelwanne (14, 47) vorgeschen ist, in der eine Trennung der aus den mindestens zwei Behandlungszonen austretenden Flüssigkeiten zu deren Weiterverwendung stattfindet.

9. Vorrichtung nach Anspruch 8, dadurch gekennzeichnet, daß die zweite Behandlungszone (11) jeweils 1/6 der Wärmetauscheranordnung umfaßt.

10. Vorrichtung nach Anspruch 8, dadurch gekennzeichnet, daß der Wärmetauscher (6) aus einer Mehrzahl von parallel angeordneten Rohren (7) besteht.

11. Vorrichtung nach Anspruch 10, dadurch gekennzeichnet, daß die Rohre (7) des Wärmetauschers (6) vertikal verlaufen.

12. Vorrichtung nach Anspruch 11, dadurch gekennzeichnet, daß Sprühdüsen (22 ; 45, 51) für die Absorptionsflüssigkeit oberhalb des Eintritts (8) für das Rauchgas in den Wärmetauscher (6) angeordnet sind.

13. Vorrichtung nach den Ansprüchen 8 bis 12, dadurch gekennzeichnet, daß die Rohre (7) des Wärmetauschers (6) innerhalb eines Kreisrings angeordnet sind und die Rohre innerhalb ·von mehreren Sektoren jeweils zu einer Betriebszone (11 ; 12) zusammengefaßt sind.

14. Vorrichtung nach den Ansprüchen 8 bis 13, dadurch gekennzeichnet, daß jeder Betriebszone (11 ; 12) ein eigenes Versorgungssystem (14, 16, 18, 22, 24) für die Absorptionsflüssigkeit zugeordnet ist, das von der ersten auf die zweite Absorptionsflüssigkeit und umgekehrt umschaltbar ist.

15. Vorrichtung nach Anspruch 14, dadurch gekennzeichnet, daß jedes Versorgungssystem zusätzlich zu der unterhalb des Austritts (9) des Wärmetauschers angeordneten Kondensat-Sammelwanne (14) einen Behälter (16), einen Kalkmilch-Behälter (18), ein pH-Meßgerät (21), eine Dosiereinrichtung (19) und Sprühdüsen (22) umfaßt.

16. Vorrichtung nach den Ansprüchen 8 bis 15 daduurch gekennzeichnet, daß der Wärmetauscher (6) von einem zentrisch zu dem Rohrbündel verlaufenden Rauchgaskamin (3) durchsetzt ist.

17. Vorrichtung nach den Ansprüchen 8 bis 16, daduurch gekennzeichnet, daß am Rauchgasaustritt (9) einer jeden Zone (11, 12) zwei gegenläufig verschließbare Öffnungen (23, 24) angeordnet sind, wobei die ersten Öffnungen (23) die Verbindung mit dem Rauchgaskamin (3) und die andere Öffnung (24) die Verbindung über eine Bypassleitung (26) und ein Zusatzgebläse (27) zum Rauchgaseintrittsrohr (5) darstellt.

18. Vorrichtung nach den Ansprüchen 8 bis 13, dadurch gekennzeichnet, daß sämtliche Behandlungszonen (11, 12) eine Sprühdüsenanordnung (51) für die erste Absorptionsflüssigkeit aufweisen und eine weitere Sprühdüsenanordnung (46) für die zweite Absorptionsflüssigkeit vorgesehen ist, die wahlweise über den Eintritt (8) der jeweiligen Behandlungszone (11), die mit der zweiten Absorptionsflüssigkeit betrieben wird, einstellbar ist.

19. Vorrichtung nach Anspruch 18, dadurch gekennzeichnet, daß der Rauchgaskamin (3) außerhalb des Rohrbündels des Wärmetauschers (6) verläuft und ein zentral zum Rohrbündel geführtes, um eine Achse (40) drehbares Rohr vorgesehen ist, das die Sprühdüsenanordnung (45) für die zweite Absorptionsflüssigkeit trägt und über das diese Sprühdüsenanordnung (45) gespeist wird.

20. Vorrichtung nach Anspruch 19, dadurch gekennzeichnet, daß die unterhalb des Austritts (9) des Wärmetauschers (6) vorgesehene Kondensat-Sammelwanne (47) über eine Behandlungszone reicht, sich mit dem zentralen Rohr (40) mitdreht und unterhalb der jeweiligen zweiten Behandlungszone (11) einstellbar ist.


**Claims**

1. Method for separating harmful substances from flue gases containing sulphur dioxide, in which

a) the flue gas is cooled,

b) for gas cleaning in a first treatment zone a first absorption liquid is introduced into the flue gas, while

c) for plant cleaning in a second treatment zone a second absorption liquid is introduced into the flue gas,

d) and the two treatment zones are cyclically changed over, characterised in that

e) the washing and cooling of the flue gas takes place simultaneously in the same apparatus, the flue gas being cooled below the dew point and

f) this cooling process is carried out with external air flowing in the opposite direction,

g) the flue gas during its passage through the apparatus is split into at least two parallel running partial streams, of which the first is guided through the first treatment zone and the second is guided through the second treatment zone,

h) the condensate obtained from the flue gas and the absorption liquid are guided in a unidirectional flow, and

i) the condensate obtained from the flue gas with the sulphuric acid dissolved therein is introduced into the second treatment zone as the second absorption liquid for plant cleaning.

2. Method according to claim 1, characterised in that the first absorption liquid is lime water, calcium oxide suspension, calcium carbonate suspension or a mixture thereof.

3. Method according to claim 1 or 2, characterised in that a pre-cooling of the flue gas of 40 °C to 60 °C is carried our by means of heat recovery.

4. Method according to claims 1 to 3, characterised in that the cleaned flue gas is mixed with the external air used for cooling the flue gas before discharge into the atmosphere.

5. Method according to claim 1, characterised in that the flue gas from the second treatment zone (plant cleaning) is returned into the washing cycle.

6. Method according to claims 1 to 5, characterised in that 5/6 of the flue gas stream to be cleaned has the first absorption liquid passed through it and 1/6 of the flue gas stream has the second absorption liquid passed through it and that the reversing cycle takes one to four hours.

7. Method according to claims 1 to 6, characterised in that the cyclic exchanging of the second treatment zone (11) with the other zones (12) takes place within a time interval of 4 to 6 hours.

8. Device for carrying the method according to claim 1, with

a) a cooling device for the flue gas,

b) an absorption device comprising at least two treatment zones, and

c) an arrangement for cyclically exchanging the two treatment zones, characterised in that

d) an absorption heat exchanger arrangement (1) is provided,

e) in this absorption heat exchanger arrangement at least two treatment zones (11, 12) are connected in parallel with each other, and

f) below the absorption heat exchanger arrangement is provided a condensate collecting tank (14, 47), divided into zones, in which the liquids discharged from at least two treatment zones are separated for their continued use.

9. Device according to claim 8, characterised in that the second treatment zone (11) in each case comprises 1/6 of the heat exchanger arrangement.

10. Device according to claim 8, characterised in that the heat exchanger (6) consists of a plurality of tubes (7) arranged in parallel.

11. Device according to claim 10, characterised in that the tubes (7) of the heat exchanger (6) run vertically.

12. Device according to claim 11, characterised in that spray nozzles (22 ; 45, 51) for the absorption liquid are arranged above the inlet (8) for the flue gas into the heat exchanger (6).

13. Device according to the claims 8 to 12, characterised in that the tubes (7) of the heat exchanger (6) are arranged within a circle and the tubes within several sectors are each grouped into an operational zone (11 ; 12).

14. Device according to the claims 8 to 13, characterised in that each operational zone (11 ;

12) is provided with its own supply system (14, 16, 18, 22, 24) for the absorption liquid, which can be switched from the first to the second absorption liquid and vice versa.

15. Device according to claim 14, characterised in that each supply system, additionally to the condensate collecting tank (14) arranged below the heat exchanger outlet (9), comprises a container (16), a lime water container (18), a pH measuring apparatus (21), a metering device (19) and spray nozzles (22).

16. Device according to the claims 8 to 15, characterised in that the heat exchanger (6) has a flue gas chimney (3) extending through the centre of the tube bundle.

17. Device according to claims 8 to 16, characterised in that the flue gas outlet (9) of each zone (11, 12) is provided with two oppositely closing openings (23, 24), in which the first openings (23) provide the connection with the flue gas chimney (3) and the other opening (24) provides the connection to the flue gas inlet pipe (5) via a bypass pipe (26) and a booster fan (27).

18. Device according to claims 8 to 13, characterised in that all the treatment zones (11, 12) have a spray nozzle arrangement (51) for the first absorption liquid and a further spray nozzle arrangement (46) is provided for the second absorption liquid which can be selectively adjusted to be over the inlet (8) of the respective treatment zone (11), which is sprayed with the second absorption liquid.

19. Device according to claim 18, characterised in that the flue gas chimney (3) extends outside the tube bundle of the heat exchanger (6) and rotatable about an axis (40) and extending centrally to the tube bundle is a pipe which carries the spray nozzle arrangement (45) for the second absorption liquid and through which this spray nozzle arrangement (45) is supplied.

20. Device according to claim 19, characterised in that below the outlet (9) of the heat exchanger (6) and extending over a treatment zone is a condensate collecting tank (47) which rotates with the central pipe (40) and can be adjusted to be below the respective second treatment zone (11).

**Revendications**

1. Procédé de séparation de substances nocives dans des gaz de fumée contenant de l'anhydride sulfureux, dans lequel
   a) les gaz de fumée sont refroidis,
   b) on introduit un premier liquide d'absorption dans les gaz de fumée, dans une première zone de traitement, dans le but de nettoyer le gaz, pendant que,
   c) on introduit un deuxième liquide d'absorption dans les gaz de fumée, dans une deuxième zone de traitement, dans le but de nettoyer l'installation,
   d) et les deux zones de traitement sont changées cycliquement, caractérisé en ce que

   e) l'on entreprend simultanément, dans un premier dispositif, aussi bien le refroidissement que le lavage des gaz de fumée, les gaz de fumée étant refroidis au-dessous du point de rosée et
   f) ce processus de refroidissement s'effectue au moyen de l'air extérieur et à contre-courant,
   g) lors de leur passage dans le dispositif, les gaz de fumée sont subdivisés en au moins deux courants partiels guidés en parallèle, dont le premier courant est conduit dans la première zone de traitement et dont le deuxième courant est conduit dans la deuxième zone de traitement,
   h) le condensat formé à partir des gaz de fumée et le liquide d'absorption étant conduit en écoulement antiméthodique
   i) le condensat formé à partir des gaz de fumée, avec l'acide sulfurique dissout en son sein est introduit à titre de deuxième liquide d'absorption dans la deuxième zone de traitement, dans le but de nettoyer l'installation.

2. Procédé selon la revendication 1, caractérisé en ce que le premier liquide d'absorption est du lait de chaux, une suspension d'oxyde de calcium, une suspension de carbonate de calcium ou un mélange de ces produits.

3. Procédé selon la revendication 1 ou 2, caractérisé en ce qu'on entreprend un prérefroidissement des gaz de fumée jusqu'à 40 °C à 60 °C, à l'aide d'une récupération de chaleur.

4. Procédé selon les revendications 1 à 3, caractérisé en ce que les gaz de fumée nettoyés sont mélangés à l'air extérieur introduit pour le refroidissement des gaz de fumée avant d'entrer dans l'atmosphère.

5. Procédé selon la revendication 1, caractérisé en ce que les gaz de fumée provenant de la deuxième zone de traitement (installation de nettoyage) sont retournés dans le cycle de lavage.

6. Procédé selon les revendications 1 à 5, caractérisé en ce que 5/6 du débit de gaz de fumée à nettoyer sont mélangés au premier liquide d'absorption et que 1/6 est mélangé au deuxième liquide d'absorption, et en ce que le cycle de commutation dure de une à quatre heures.

7. Procédé selon les revendications 1 à 6, caractérisé en ce que le changement cyclique de la deuxième zone de traitement (11) avec les autres zones (12) s'effectue avec un intervalle de temps allant de 4 à 6 heures.

8. Dispositif pour l'exécution du procédé selon la revendication 1, avec
   a) un dispositif de refroidissement pour les gaz de fumée,
   b) un dispositif d'absorption qui comprend au moins deux zones de traitement, et
   c) un dispositif pour l'échange cyclique des deux zones de traitement, caractérisé en ce que
   d) il est prévu un dispositif d'absorption-échangeur de chaleur (1),
   e) au moins deux zones de traitement (11, 12) sont branchées en parallèle l'une par rapport à l'autre dans ce dispositif d'absorption-échangeur de chaleur,
   f) un bac de collection de condensat (14, 47) subdivisé par zones est prévu au-dessous du dispositif d'absorption-échangeur de chaleur, dans lequel a lieu une séparation des liquides sortant des au moins deux zones de traitement, dans le but de leur réutilisation.

9. Dispositif selon la revendication 8, caractérisé en ce que la deuxième zone de traitement (11) comprend chaque fois 1/6 du dispositif échangeur de chaleur.

10. Dispositif selon la revendication 8, caractérisé en ce que l'échangeur de chaleur (6) se compose d'une pluralité de tubes (7) disposés en parallèle.

11. Dispositif selon la revendication 10, caractérisé en ce que les tubes (7) de l'échangeur de chaleur (6) s'étendent verticalement.

12. Dispositif selon la revendication 11, charactérisé en ce que des buses de pulvérisation (22 ; 45, 51) destinées au liquide d'absorption sont disposées au-dessus de l'entrée (8) des gaz de fumée dans l'échangeur de chaleur (6).

13. Dispositif selon les revendications 8 à 12, caractérisé en ce que les tubes de l'échangeur de chaleur (6) sont disposés à l'intérieur d'un anneau circulaire et les tubes sont regroupés à l'intérieur de plusieurs secteurs chaque fois en une zone de fonctionnement (11, 12).

14. Dispositif selon les revendications 8 à 13, caractérisé en ce qu'un système d'alimentation propre (14, 16, 18, 22, 24) pour le liquide d'absorption est affecté à chaque zone de fonctionnement (11 ; 12) et est commutable pour passer du premier au deuxième liquide d'absorption et inversement.

15. Dispositif selon la revendication 14, caractérisé en ce que chaque système d'alimentation comprend, en plus du bac de collection de condensat (14) disposé au-dessous de la sortie (9) de l'échangeur de chaleur un réservoir (16), un réservoir à lait de chaux (18), un appareil de mesure du pH (21), un dispositif de dosage (19) et des buses de pulvérisation (22).

16. Dispositif selon les renvendications 8 à 15, caractérisé en ce que l'échangeur de chaleur (6) est traversé par une cheminée de gaz de fumée (3) s'étendant centralement par rapport au faisceau tubulaire.

17. Dispositif selon les revendications 8 à 16, caractérisé en ce que deux orifices (23, 24) obturables à contresens sont disposés à la sortie de gaz de fumée (9) de chacune des zones (11, 12), les premiers orifices (23) constituant la liaison à la cheminée de gaz de fumée (3) et l'autre orifice (24) constituant la liaison au tube d'entrée des gaz de fumée, par l'intermédiaire d'une conduite de dérivation (26) et d'une soufflante d'appoint (27).

18. Dispositif selon les revendications 8 à 13, caractérisé en ce que l'ensemble des zones de traitement (11, 12) présente un agencement de buses de pulvérisation (51) pour le premier liquide d'absorption et qu'il est prévu un agencement supplémentaire de buses de pulvérisation (46) pour le deuxième liquide de pulvérisation, qui est réglable à volonté, sur l'entrée (8) de chaque zone de traitement (11) et fonctionne avec le deuxième liquide d'absorption.

19. Dispositif selon la revendication 18, caractérisé en ce que la cheminée de gaz de fumée (3) s'étend à l'extérieur du faisceau tubulaire de l'échangeur de chaleur (6) et qu'il est prévu un tube central par rapport au faisceau tubulaire, tournant autour d'un axe (40), tube portant l'agencement de buses de pulvérisation (45) pour le deuxième liquide d'absorption et par l'intermédiaire duquel ce deuxième agencement de buses de pulvérisation (45) est alimenté.

20. Dispositif selon la revendication 19, caractérisé en ce que le bac de collection de condensat (47) prévu au-dessous de la sortie (9) de l'échangeur de chaleur (6) arrive sur une zone de traitement, tourne conjointement avec le tube central (40) et est susceptible d'être positionné au-dessous de chaque deuxième zone de traitement (11).

FIG. 1

FIG. 2

FIG. 3

EP 0 148 469 B1

# FIG. 4